# EUROPÄISCHE PATENTSCHRIFT

(11) **EP 0 728 617 B1**
(45) Veröffentlichungstag und Bekanntmachung des Hinweises auf die Patenterteilung: **06.09.2000**
(21) Anmeldenummer: 96101488.3
(22) Anmeldetag: 02.02.1996
(51) Int. Cl.: B60Q 3/02

(54) **Innenleuchte für Fahrzeuge**
Interior light for vehicle
Eclairage intérieur pour véhicule

(30) Priorität: 25.02.1995 DE 19506651
(43) Veröffentlichungstag der Anmeldung: 28.08.1996
(73) Patentinhaber: Hella KG Hueck & Co., 59552 Lippstadt (DE)
(72) Erfinder: Hahn, Kurt, D-59558 Lippstadt (DE); Schwarz, Axel, D-59556 Lippstadt (DE)

(56) Entgegenhaltungen:
- DE-A- 3 703 847
- DE-A- 3 730 284
- DE-U- 9 105 784

## Beschreibung

Die Erfindung betrifft eine Innenleuchte für Fahrzeuge, welche am Dachhimmel eines Fahrzeuginnenraumes befestigbar ist, mit mindestens einem an der Rückseite der Innenleuchte angeordneten Lichtleiterstab, welcher eine an einer Lichtquelle benachbart liegende Lichteintrittsfläche und eine Lichtaustrittsfläche aufweist und mit einem durch den Lichtleiterstab ausleuchtbaren Symbol.

Eine solche Innenleuchte für Fahrzeuge ist aus der DE 37 03 847 C2 bekannt. Die Innenleuchte ist auf ihrer Rückseite mit einem Lichtleiterstab versehen, welche mehrere Lichteintrittsflächen und eine einzige Lichtaustrittsfläche aufweist. Die Lichteintrittsflächen sind an einer schmalen langen Seitenfläche des Lichtleiterstabes angebracht und den Lichteintrittsflächen ist jeweils eine Lichtquelle zugeordnet. Als Lichtaustrittsfläche dient eine breite, schmale, lange Seitenfläche des Lichtleiterstabes. Der Lichtaustrittsfläche ist eine in ein Fenster der Innenleuchte eingesetzte Trägerschicht für ein ausleuchtbares Symbol zugeordnet. Dem Lichtleiterstab sind mehrere Lichtquellen zugeordnet, damit die das Symbol aufweisende großflächige Trägerschicht möglichst gleichmäßig ausgeleuchtet ist. Bei einer defekten Lichtquelle sind zwar weiterhin Teilbereiche der das Symbol aufweisenden Trägerschicht ausgeleuchtet, jedoch ist der Lichtleiterstab nicht geeignet, um kleinflächige Symbole auszuleuchten, welche Schaltern einer Innenleuchte zugeordnet sind.

Aus der DE-U1 91 05 784 ist ein beleuchtbares Sicherheitsgurtschloß bekannt. Das Sicherheitsgurtschloß weist ein Gehäuse mit mechanischen Bauteilen und einen U-förmigen Lichtleiter auf, an dessen Enden jeweils eine Lichtquelle angeordnet ist. Im mittleren Bereich des Lichtleiters ist eine Lichtauskoppelstelle vorgesehen, durch welche ein in das Gehäuse des Gurtschlosses eingebrachter Schlitz beleuchtet ist. In den Schlitz ist eine mit einem Gurt verbundene Gurtschloßzunge einsteckbar. Mit der Gurtschlußzunge ist in dem Gehäuse ein Schalter betätigbar, durch welchen die dem Lichtleiter zugeordneten Lichtquellen schaltbar sind.

Aufgabe der Erfindung ist es, die in dem Oberbegriff des überarbeiteten Anspruchs 1 beschriebene Innenleuchte für Fahrzeuge derart zu gestalten, daß sowohl ein Symbol für den Schalter der Innenraumbeleuchtung des Fahrzeugs als auch weiteren Schaltern zugeordnete Symbole ausleuchtbar sind und des weiteren sämtliche Symbole etwa gleichstark ausleuchtbar sind, auch wenn nicht für jedes Lichtaustrittsfenster des Lichtleiters eine Lichtquelle vorgesehen ist; ferner soll die Ausleuchtung des Symbols für die Innenraumbeleuchtung auch bei einer defekten Lichtquelle sichergestellt sein und der Lichtleiter soll möglichst wenig Raum einnehmen, um zu erreichen, daß ein oder mehrere in die Innenleuchte eingebrachte Lichtaustrittsfenster für die Innenraumbeleuchtung nicht kleiner ausfallen müssen.

Die Aufgabe wird nach der Erfindung dadurch gelöst, daß
- an der Rückseite der Innenleuchte zwei Lichtleiterstäbe (1) nebeneinander angeordnet sind, welchen jeweils eine Lichtquelle (2) zugeordnet ist und welche jeweils eine Lichteintrittsfläche (3) und eine Lichtaustrittsfläche (4) aufweisen und zwischen der Lichteintrittsfläche (3) und Lichtaustrittsfläche (4) durch einen sie verbindenden Lichtleitersteg (6) zu einem einstückigen Lichtleiterelement (7) ausgebildet sind, dessen Lichtleitersteg (6) für beide Lichtleiterstäbe (1) eine gemeinsame Lichtaustrittsfläche (9) aufweist;
- zwischen beiden Lichtleiterstäben (1) und angrenzend an den Lichtleitersteg (6) der Schalter (8) für die Innenraumbeleuchtung des Fahrzeugs angeordnet ist, welchem ein durch die Lichtaustrittsfläche (9) des Lichtleitersteges (6) ausleuchtbares Symbol (5) für die Innenraumbeleuchtung zugeordnet ist.

Für die beiden nebeneinanderliegenden Lichtleiterstäbe und den Lichtleitersteg ist nur sehr wenig Raum auf der Rückseite notwendig, wenn diese den Schalter eng umgeben, obwohl zur Ausleuchtung von drei Symbolen lediglich zwei Lichtquellen erforderlich sind ist bei einer defekten Lichtquelle mindestens das dem Lichtleitersteg zugeordnete Symbol für die Innenraumbeleuchtung ausgeleuchtet.

Das der Lichtaustrittsfläche des Lichtleitersteges zugeordnete Symbol eines Schalters ist besonders hell ausgeleuchtet, wenn die beiden Lichtleiterstäbe auf der dem Lichtleitersteg abgewandten Seite durch eine Stufe eine Reflexionsfläche aufweisen, durch welche Lichtstrahlen in den Lichtleitersteg hineinreflektieren und der Lichtleitersteg auf der der Lichtaustrittsfläche abgewandten Seite eine V-förmige Aussparung aufweist, deren Flächen Lichtstrahlen zur Lichtaustrittsfläche des Lichtleiterstegs hin reflektieren. Hierbei sollten die Reflexionsflächen nur einen Teil der Lichtstrahlen jedes Lichtleiterstabes in den Lichtleitersteg hineinreflektieren, damit jeder Lichtleiterstab an seinem freien Ende ein Symbol eines Schalters ausreichend hell ausleuchten kann.

Den Lichtleiter T-förmig auszuführen ist besonders zweckmäßig, wenn der Querbalken die beiden Lichtleiterstäbe miteinander verbindet und der senkrechte Balken an seinem freien Ende die Lichtaustrittsfläche aufweist, da dann der Abstand zwischen der Lichtaustrittsfläche und dem Symbol des Schalters sehr klein sein kann. Auch der Abstand der Lichtaustrittsfläche am Ende der beiden nebeneinanderliegenden Lichtleiterstäbe zu einem Symbol eines Schalters kann klein sein, wenn die freien Endabschnitte der Lichtleiterstäbe stufenförmig zur Vorderseite der Innenleuchte hin verlaufen. Ein weiterer Vorteil hierbei ist es, daß durch den stufenförmigen Endabschnitt auf der Rückseite der Innenleuchte Raum für einen nach dem Lichtleiterelement zu montierenden Leuchtenteil, wie zum Beispiel einem elektrischen Stecker besteht.

Das Lichtleiterelement weist eine zweckmäßige Form auf, wenn die beiden Lichtleiterstäbe und der sie verbindende Lichtleitersteg zusammen H-förmig ausgebildet sind. Dadurch können zwei Schalter zwischen den beiden nebeneinanderliegenden Lichtleiterstäben angeordnet sein, wobei der Lichtleitersteg zwischen den beiden Schaltern verläuft und der Schalter, welchem das durch den Lichtleitersteg ausleuchtbare Symbol zugeordnet ist, zwischen dem Lichtleitersteg und den beiden Lichtquellen angeordnet ist.

Das Lichtleiterelement weist eine sehr hohe Steifigkeit auf, wenn die beiden Lichtleiterstäbe an ihren die Lichteintrittsfläche aufweisenden Enden durch einen Steg miteinander verbunden sind. Der Steg kann die Anspritzstelle des Lichtleiterelements aufweisen und zusätzlich auch als Lichtleiter dienen.

Bei einer besonders vorteilhaften Weiterbildung der Erfindung weist das Lichtleiterelement mindestens einen seitlich verlaufenden Lichtleiterstab auf, welcher an dem die Lichteintrittsfläche aufweisenden Endabschnitt eines der beiden nebeneinanderliegenden Lichtleiterstäbe angeformt ist. Durch die zusätzlichen Lichtleiterstäbe sind weiteren Schaltern zugeordnete Symbole ausleuchtbar. Die Lage eines solchen Schalters ist besonders zweckmäßig, wenn der seitlich verlaufende Lichtleiterstab des Lichtleiterelementes winkelförmig ausgeführt ist, wobei der Schalter zwischen seinem freien Schenkel und dem dem freien Schenkel benachbarten Lichtleiterstab angeordnet ist. Bei zwei winkelförmigen Lichtleiterstäben können somit drei Schalter in einer Reihe nebeneinander liegen und für das Lichtleiterelement ist nur sehr wenig Raum notwendig.

Die Lichtaustrittsflächen des Lichtleiterelementes sind nach seinem Aufsetzen auf die Rückseite der Innenleuchte genau zu den Symbolen der Schalter fixiert, wenn zumindest ein zur Vorderseite der Innenleuchte hin gerichteter und eine Lichtaustrittsfläche aufweisender Lichtleiterabschnitt durch eine Öffnung einer einen kappenförmigen Schalterknopf aufnehmenden Vertiefung des Leuchtengehäuses hindurchfährt und zum kappenförmigen Schalterknopf hinweist, welcher an seiner Vorderseite ein ausleuchtbares Symbol trägt. Da die Fixierung des Lichtleiters schließlich durch das Leuchtengehäuse erfolgt, können die Schalter nach dem Lichtleiterelement montiert werden. Zudem sind die Lichtaustrittsflächen des Lichtleiterelements in einer von der Vertiefung des Leuchtengehäuses und dem Schalterknopf gebildeten Kammer angeordnet und somit kann kein aus der Lichtaustrittsfläche austretender Lichtstrahl stören.

Eine Leuchtenkammer der Innenleuchte ist gegenüber Störstrahlen des Lichtleiterelements besonders gut geschützt, wenn das Lichtleiterelement durch eine an der Rückseite der Innenleuchte befestigte Leiterplatte abgedeckt ist, welche an ihrer Innenseite mindestens eine für die Innenraumbeleuchtung des Fahrzeuges dienende Lichtquelle trägt, zwischen der und dem Lichtleiterelement mindestens ein Abschirmelement verläuft. Die Montage der Lichtquelle für die Leuchtenkammer ist sehr einfach, da sie zusammen mit dem Aufsetzen der Leiterplatte erfolgt. Auch bei einem sehr großen Spiel zwischen der Fassung der Lichtquelle und der Leuchtenkammer können wegen dem Abschirmelement keine die Leuchtenkammer aufhellende Störstrahlen in die Leuchtenkammer gelangen. Die Leuchtenkammer ist besonders gut gegen Störstrahlen des Lichtleiterelementes geschützt, wenn ein die Vorderseite der Innenleuchte aufweisendes Leuchtengehäuse, die Leiterplatte und zwischen dem Leuchtengehäuse und der Leiterplatte angeordnete Abschirmelemente eine das Lichtleiterelement aufnehmende Kammer bilden. Die Abschirmelemente können von an die Rückseite der Innenleuchte angeformten Wänden von einer von der Leiterplatte getragenen Fassung die Lichtquelle für die Innenraumbeleuchtung und von einem von der Leiterplatte getragenen elektrischen Stecker der Innenleuchte gebildet sein. Die Lichtquellen für das Lichtleiterelement sollten ebenfalls von der Leiterplatte getragen sein.

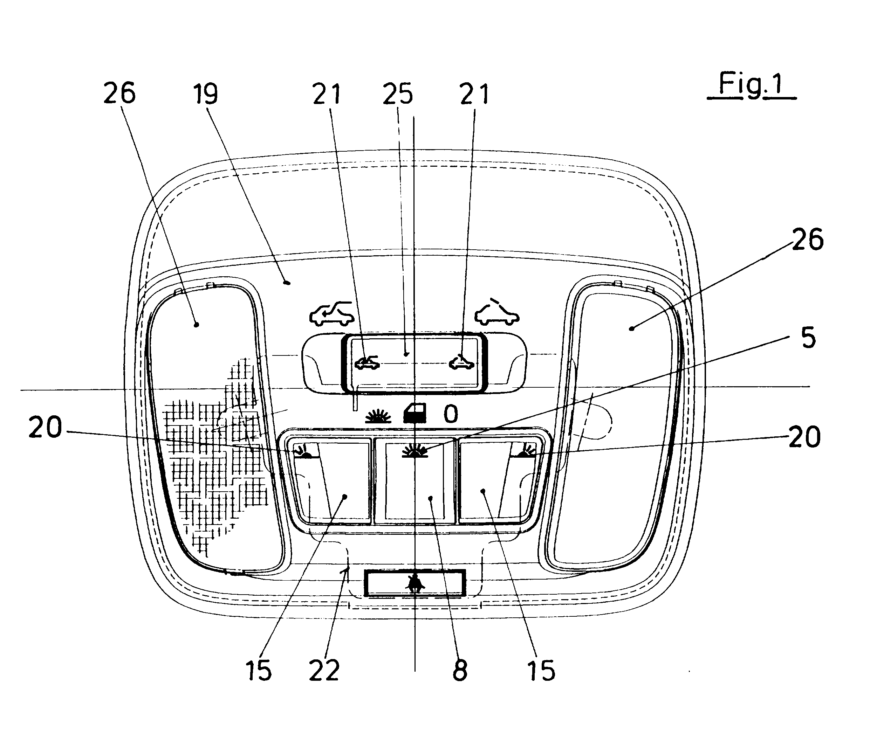

Ein Ausführungsbeispiel nach der Erfindung ist in den Zeichnungen dargestellt und zwar zeigen
- Figur 1: einen Vorderansicht auf eine Innenleuchte für Fahrzeuge mit zwei Leuchtenkammern und mehreren elektrischen Schaltern;
- Figur 2: eine Rückansicht auf die Innenleuchte, wobei eine Hälfte der Innenleuchte ohne eine auf die Rückseite der Innenleuchte aufgesetzte Leiterplatte dargestellt ist;

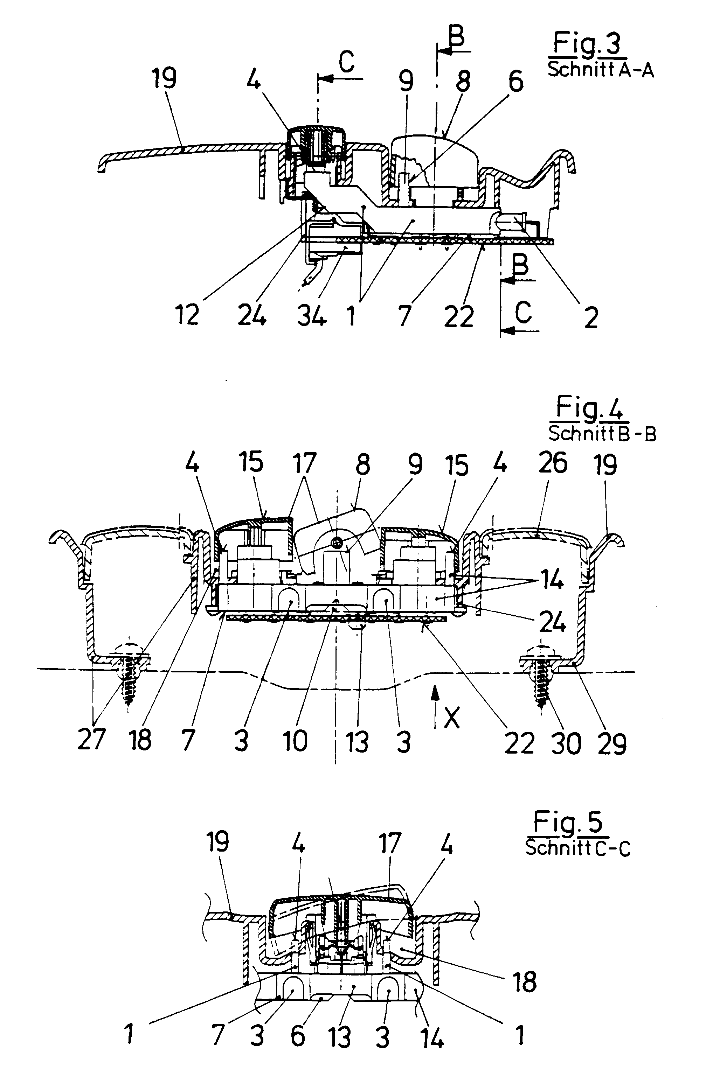

- Figur 3: ein Schnitt nach der Linie A-A in Figur 2;
- Figur 4: ein Schnitt nach der Linie B-B in Figur 3;
- Figur 5: ein Schnitt nach der Linie C-C in Figur 3;

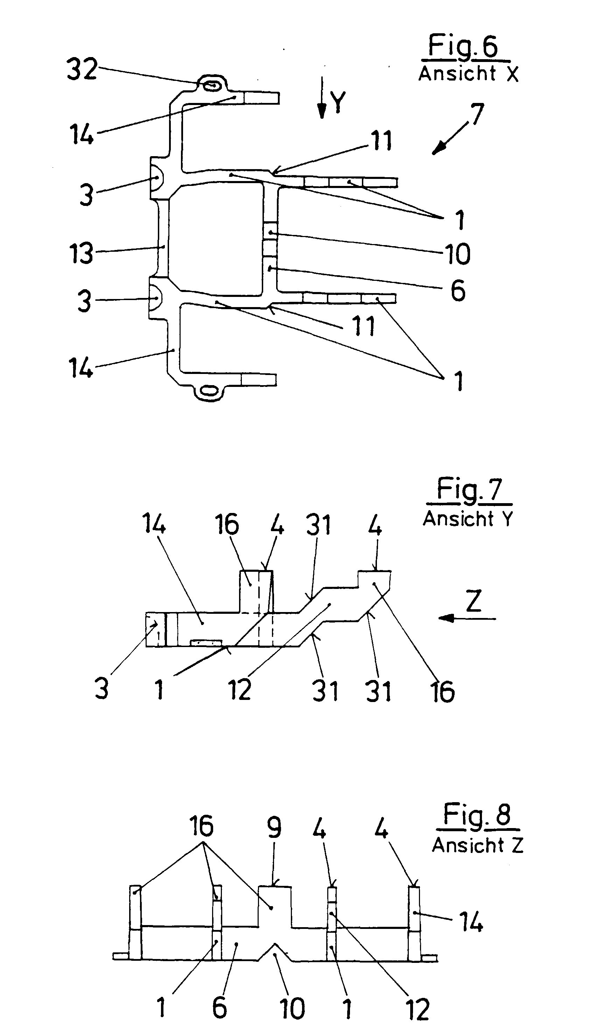

- Figur 6: eine Ansicht aus Richtung X in Figur 4 auf ein an die Rückseite der Innenleuchte angebrachtes Lichtleiterelement;
- Figur 7: eine Ansicht aus Richtung Y in Figur 6 und
- Figur 8: eine Ansicht aus Richtung Z in Figur 7.

Die in der Zeichnung dargestellte Innenleuchte für Fahrzeuge ist in eine Öffnung eines Dachhimmels im Fahrzeuginnenraum einsetzbar. Die Innenleuchte weist von der Vorderseite her gesehen ein aus Kunststoff bestehendes rechteckförmiges Leuchtengehäuse (19) auf. In das Leuchtengehäuse (19) sind zwei rechteckförmige Fenster für jeweils eine lichtdurchlässige Lichtscheibe (26) angebracht. Die Fenster sind auf der Rückseite des Leuchtengehäuses (19) umlaufend von einem Kragen (27) umgeben. Die beiden Kragen (27) weisen auf sich zugewandten Seiten jeweils eine Aussparung (28) auf, welche zur Aufnahme einer Lichtquelle (23) für die Innenraumbeleuchtung des Fahrzeuges dient. An den Kragen (27) sind winkelförmige Haltelappen (29) angeformt, welche mittels Befestigungsschrauben (30) an dem Fahrzeug festsetzbar sind.

Von der Vorderseite der Innenleuchte her gesehen sind zwischen den beiden Lichtscheiben (26) in das Leuchtengehäuse (19) Vertiefungen (18) eingebracht, welche zur Aufnahme von kappenförmigen Schalterknöpfen (17) elektrischer Schalter (8, 15, 25) dienen. In einer Vertiefung (18) ist der Schalter (8), welcher der Hauptschalter für die Innenleuchte ist und die beiden den Schalter (8) zwischen sich aufnehmenden Schalter (15) für Leselicht angeordnet. Bei dem Schalter (8) handelt es sich um einen Kippschalter, welcher in der Mittelstellung über Türkontakt schaltet, in einer Endstellung die Innenleuchte ausschaltet und in der anderen Endstellung die Innenleuchte bei geschlossener Tür einschaltet. Die beiden Schalter (15) sind Tastenschalter, welche in eine ein- und ausgeschaltete Stellung schaltbar sind. Die beiden Schalter (15) für das Leselicht sind jeweils einer Lichtquelle (23) benachbart, welche von dem jeweiligen Schalter (15) ein- bzw. ausschaltbar ist. Die Schalterknöpfe (17) der drei Schalter (8, 15) grenzen aneinander, weisen zusammen eine rechteckförmige Form auf. Parallel zu einer Längsseite des Rechtecks verläuft der Schalter (25) mit der Längsseite seines rechteckförmigen Schalterknopfes (17). Eine zwischen den beiden Lichtscheiben (26) verlaufende Mittelebene der Innenleuchte ist die Symmetrieebene für die gesamte Innenleuchte und somit auch für die vier Schalter (8, 15, 25). Bei dem Schalter (25) handelt es sich wie bei dem Schalter (8) um einen Kippschalter mit drei Endstellungen, wobei die Schwenkachse der beiden Schalter (8, 25) in der Symmetrieebene liegt. Der Schalter (25) weist eine Mittelstellung und zwei Endstellungen auf. Durch Schalten des Schalters (25) in seine Endstellungen öffnet sich ein Schiebe- und Hebedach des Fahrzeuges.

Zwischen die beiden Lichtquellen (23) für die Innenraumbeleuchtung des Fahrzeuges ist auf die Rückseite des Leuchtengehäuses (19) ein Lichtleiterelement (7) aufgesetzt. Das Lichtleiterelement (7) ist einstückig aus lichtdurchlässigem Kunststoff hergestellt. Das Lichtleiterelement (7) weist einen H-förmigen Abschnitt auf, von dem die beiden vertikalen Balken ein Lichtleiterstab (1) sind und der Querbalken (6) ein die beiden Lichtleiterstäbe (1) verbindender Lichtleitersteg (6) ist. Die Lichtleiterstäbe (1) weisen an einem Ende eine Verdickung mit einer Vertiefung (18) auf, deren Flächen die Lichteintrittsflächen (3) für die Lichtleiterstäbe (1) sind. In die Vertiefungen der Lichtleiterstäbe (1) ragt jeweils eine Lichtquelle (2) hinein. Als Lichtquellen (2) dienen LEDs. An die Verdickungen der beiden annähernd parallel zueinander verlaufenden Lichtleiterstäbe (1) ist jeweils ein weiterer Lichtleiterstab (14) angeformt. Die Lichtleiterstäbe (14) sind winkelförmig ausgeführt, wobei der an den jeweiligen Lichtleiterstab (1) angebundene freie Schenkel annähernd parallel zum Lichtleitersteg (6) verläuft, während der freie Schenkel zusammen mit den freien Endabschnitt (12) der beiden Lichtleiterstäbe (1) in dieselbe Richtung weist. Die beiden Lichtleiterstäbe (1) sind an ihren Verdickungen durch einen Steg (13) miteinander verbunden, welcher zur Versteifung des Lichtleiterelementes (7) dient und welcher die Anspritzstelle für das Lichtleiterelement (7) aufweist. Zwischen den beiden Lichtleiterstäben (1) und zwischen dem Lichtleitersteg (6) und dem Steg (13) ist der Schalter (8) angeordnet, während die beiden Schalter (15) von den winkelförmigen Lichtleiterstäben (14) umgeben sind. Der Lichtleitersteg (6) ist T-förmig ausgeführt, wobei der Querbalken der T-Form die beiden Lichtleiterstäbe verbindet und der senkrechte Balken ein Lichtleiterabschnitt (16) ist, welcher durch eine Öffnung im Boden der Vertiefung (18) des Leuchtengehäuses (19) hindurchgesteckt ist und sich bis nahe zu einem ausleuchtbaren Symbol (5) an der Vorderseite des Schalterknopfes (5) hin erstreckt. Die beiden winkelförmigen Lichtleiterstäbe (14) und die beiden freien Enden der annähernd parallel zueinander verlaufenden Lichtleiterstäbe (1) weisen ebenfalls an ihrem freien Ende einen Lichtleiterabschnitt (16) auf, welcher sich durch eine Öffnung der jeweiligen Vertiefung (18) bis zu einem jeweiligen Symbol (20 bzw. 21) hinstreckt. Die Symbole (20) sind in die Vorderseite des Schalterknopfes (17) des jeweiligen Schalters (15) für Leselicht angebracht, während die beiden Symbole (21) in die Vorderseite eines einzigen Schalterknopfes (17) angebracht sind, welcher der des Schalters (25) ist. Die beiden annähernd parallel zueinander verlaufenden Lichtleiterstäbe (1) weisen auf der dem Lichtleitersteg (6) abgewandten Seite eine Stufe auf, dessen Stoßfläche als Reflexionsfläche dient, durch welche Lichtstrahlen der Lichtleiter in den Lichtleitersteg (6) hineinreflektieren. Der Lichtleitersteg (6) weist auf der seiner Lichtaustrittsfläche (4) abgewandten Seite eine V-förmige Aussparung (10) auf, deren Flächen die Lichtstrahlen zur Lichtaustrittsfläche (4) hin reflektieren. Die freien Endabschnitte der parallel zueinander verlaufenden Lichtleiterstäbe (1) verlaufen stufenförmig zur Vorderseite des Leuchtengehäuses (19) hin. Mehrere Stoßflächen der Stufen verlaufen schräg zur Längsausdehnung der beiden Lichtleiterstäbe (1) und dienen als Reflexionsfläche (31), welche Lichtstrahlen so ablenken, daß sie bis zur Lichtaustrittsfläche (4) der beiden Lichtleiterstäbe (1) gelangen. An die beiden freien Schenkel der beiden winkelförmigen Lichtleiterstäbe (14) sind außen Halteösen (32) angeformt, durch welche ein Befestigungszapfen (33) des Leuchtengehäuses (19) hindurchgeführt ist, welcher an seinem hindurchgesteckten Ende plastisch verformt ist.

An das Lichtleiterelement (7) grenzen Abschirmelemente (24) an, welche an die Rückseite des Leuchtengehäuses (19) angeformte Wände sind. Die Wände schirmen störende Lichtstrahlen des Lichtleiterelementes (7) ab, welche durch die die Lichtquellen (23) aufnehmende Aussparung der Kragen (27) in die Leuchtenkammer hineingelangen könnten.

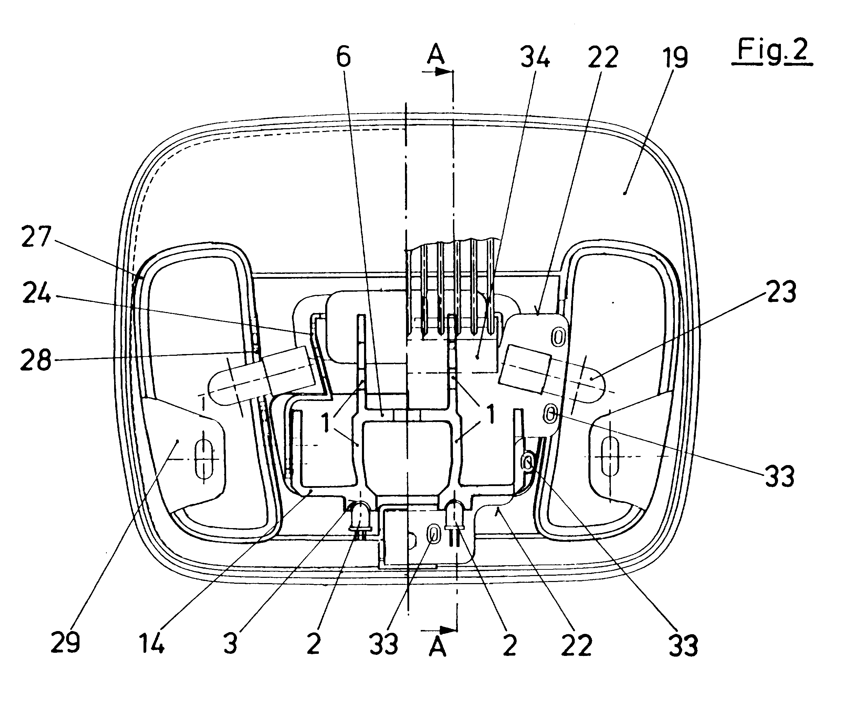

Die Lichtquellen (23) für die Innenraumbeleuchtung des Fahrzeuges und die Lichtquellen (2) für das Lichtleiterelement (7) sind von einer Leiterplatte (22) getragen, welche das Lichtleiterelement (7) abdeckt und ebenfalls mit Befestigungszapfen (33) an der Rückseite des Leuchtengehäuses (19) befestigt ist. Die Leiterplatte (22) bildet zusammen mit dem Leuchtengehäuse (19) und Abschirmelementen (24), welches an das Leuchtengehäuse angeformte Wände und ein von der Leiterplatte (22) getragener elektrischer Stecker (34) ist, eine das Lichtleiterelement (7) aufnehmende Kammer. In Figur 2 ist das Lichtleiterelement (7) auch in der rechten Hälfte der Ansicht, in welcher das Lichtleiterelement (7) durch die Leiterplatte (22) abgedeckt ist, sichtbar dargestellt, um das Lichtleiterelement (7) besser erkennen zu können.

### Bezugszeichenliste

### Innenleuchte für Fahrzeuge

- 1: Lichtleiterstab
- 2: Lichtquelle
- 3: Lichteintrittsfläche
- 4: Lichtaustrittsfläche
- 5: Symbol
- 6: Lichtleitersteg
- 7: Lichtleiterelement
- 8: Schalter
- 9: Lichtaustrittsfläche
- 10: Aussparung
- 11: Reflexionsfläche
- 12: Endabschnitt
- 13: Steg
- 14: Lichtleiterstab
- 15: Schalter
- 16: Lichtleiterabschnitt
- 17: Schalterknopf
- 18: Vertiefung
- 19: Leuchtengehäuse
- 20: Symbol
- 21: Symbol
- 22: Leiterplatte
- 23: Lichtquelle
- 24: Abschirmelement
- 25: Schalter
- 26: Lichtscheibe
- 27: Kragen
- 28: Aussparung
- 29: Haltelappen
- 30: Befestigungsschrauben
- 31: Reflexionsfläche
- 32: Halteösen
- 33: Befestigungszapfen
- 34: Stecker

## Patentansprüche

1. Innenleuchte für Fahrzeuge mit mindestens einer für die Innenraumbeleuchtung des Fahrzeugs dienenden Lichtquelle (23), welche durch einen Schalter (8) der Innenleuchte schaltbar ist, mit mindestens einem an der Rückseite der Innenleuchte angeordneten Lichtleiterstab (1), welcher eine einer Lichtquelle (2) benachbarte Lichteintrittsfläche (3) und eine Lichtaustrittsfläche (4) aufweist und mit einem durch den Lichtleiterstab (1) ausleuchtbaren Symbol (5), dadurch gekennzeichnet, daß
- an der Rückseite der Innenleuchte zwei Lichtleiterstäbe (1) nebeneinander angeordnet sind, welchen jeweils eine Lichtquelle (2) zugeordnet ist und welche jeweils eine Lichteintrittsfläche (3) und eine Lichtaustrittsfläche (4) aufweisen und zwischen der Lichteintrittsfläche (3) und Lichtaustrittsfläche (4) durch einen sie verbindenden Lichtleitersteg (6) zu einem einstückigen Lichtleiterelement (7) ausgebildet sind, dessen Lichtleitersteg (6) für beide Lichtleiterstäbe (1) eine gemeinsame Lichtaustrittsfläche (9) aufweist;
- zwischen beiden Lichtleiterstäben (1) und angrenzend an den Lichtleitersteg (6) der Schalter (8) für die Innenraumbeleuchtung des Fahrzeugs angeordnet ist, welchem ein durch die Lichtaustrittsfläche (9) des Lichtleitersteges (6) ausleuchtbares Symbol (5) für die Innenraumbeleuchtung zugeordnet ist.

2. Innenleuchte nach Anspruch 1, dadurch gekennzeichnet, daß die beiden Lichtleiterstäbe (1) auf der dem Lichtleitersteg (6) abgewandten Seite durch eine Stufe eine Reflexionsfläche (11) aufweisen, durch welche Lichtstrahlen in den Lichtleitersteg (6) hineinreflektieren und daß der Lichtleitersteg (6) auf der der Lichtaustrittsfläche (9) abgewandten Seite eine V-förmige Aussparung (10) aufweist, deren Flächen Lichtstrahlen zur Lichtaustrittsfläche (9) hinreflektieren.

3. Innenleuchte nach Anspruch 1 oder 2, dadurch gekennzeichnet, daß der Lichtleitersteg (6) T-förmig ausgeführt ist, wobei der Querbalken die beiden Lichtleiterstäbe (1) miteinander verbindet und der senkrechte Balken an seinem freien Ende die Lichtaustrittsfläche (9) aufweist.

4. Innenleuchte nach einem der Ansprüche 1 bis 3, dadurch gekennzeichnet, daß die Lichtaustrittsfläche (4) der Lichtleiterstäbe (1) am freien Ende eines stufenförmig zur Vorderseite der Innenleuchte hin verlaufenden Endabschnittes (12) angeordnet ist.

5. Innenleuchte nach einem der Ansprüche 1 bis 4, dadurch gekennzeichnet, daß die beiden Lichtleiterstäbe (1) und der sie verbindende Lichtleitersteg (6) zusammen H-förmig ausgebildet sind.

6. Innenleuchte nach einem der Ansprüche 1 bis 5, dadurch gekennzeichnet, daß die beiden Lichtleiterstäbe (1) an ihren die Lichteintrittsfläche (3) aufweisenden Enden durch einen Steg (13) miteinander verbunden sind.

7. Innenleuchte nach einem der Ansprüche 1 bis 6, dadurch gekennzeichnet, daß das Lichtleiterelement (7) mindestens einen seitlich verlaufenden Lichtleiterstab (14) aufweist, welcher an dem die Lichteintrittsfläche (3) aufweisenden Endabschnitt eines der beiden nebeneinanderliegenden Lichtleiterstäbe (1) angeformt ist und winkelförmig ausgeführt ist, wobei zwischen seinem freien Schenkel und dem dem freien Schenkel benachbarten Lichtleiterstab ein Schalter (15) angeordnet ist.

8. Innenleuchte nach einem der Ansprüche 1 bis 7, dadurch gekennzeichnet, daß zumindest ein zur Vorderseite der Innenleuchte hin gerichteter und eine Lichtaustrittsfläche (4 bzw. 9) aufweisender Lichtleiterabschnitt (16) durch eine Öffnung einer einen kappenförmigen Schalterknopf (17) aufnehmenden Vertiefung (18) des Leuchtengehäuses (19) hindurchführt und zum kappenförmigen Schalterknopf (17) hinweist, welcher an seiner Vorderseite ein ausleuchtbares Symbol (5, 20 oder 21) trägt.

9. Innenleuchte nach einem der Ansprüche 1 bis 8, dadurch gekennzeichnet, daß das Lichtleiterelement (7) durch eine an der Rückseite der Innenleuchte befestigte Leiterplatte (22) abgedeckt ist, welche an ihrer Innenseite mindestens eine für die Innenraumbeleuchtung des Fahrzeugs dienende Lichtquelle (23) trägt, zwischen der und dem Lichtleiterelement (7) mindestens ein Abschirmelement (24) verläuft.

10. Innenleuchte nach Anspruch 9, dadurch gekennzeichnet, daß ein die Vorderseite der Innenleuchte aufweisendes Leuchtengehäuse (19) die Leiterplatte (22) und zwischen dem Leuchtengehäuse (19) und der Leiterplatte (22) angeordnete Abschirmelemente (24) eine das Lichtleiterelement (7) aufnehmende Kammer bilden.

## Claims

1. Interior light for vehicles with at least one light source (23), which is switchable by means of a switch (8) of the interior light, for lighting the interior of the vehicle, with at least one light-conducting bar (1) arranged on the back of the interior light and having a light-entry face (3) adjacent to a light source (2) and a light-exit face (4), and with a symbol (5) that can be illuminated by the light-conducting bar (1), characterized in that
- two light-conducting bars (1), each cooperating with a light source (2) and having a light-entry face (3) and a light-exit face (4), are arranged side by side on the back of the interior light, and are linked, between their light-entry face (3) and light-exit face (4), by a light-conducting bridge (6) to form a one-piece light-conductor element (7), whose light-conducting bridge (6) has a common light-exit face (9) for both light-conducting bars (1);
- the switch (8) for the interior lighting of the vehicle, which co-operates with an interior lighting symbol (5) that can be illuminated by the light-exit face (9) of the light-conducting bridge (6), is arranged between the two light-conducting bars (1) and adjacent to the light-conducting bridge (6).

2. Interior light according to Claim 1, characterized in that the two light-conducting bars (1) have, on the side facing away from the light-conducting bridge (6), a reflecting face (11) formed as a step which reflects light rays into the light-conducting bridge (6), and in that the light-conducting bridge (6) has, on the side facing away from the light-exit face (9), a V-shaped notch (10) whose faces reflect light rays to the light-exit face (9).

3. Interior light according to Claim 1 or Claim 2, characterized in that the light-conducting bridge (6) is T-shaped, with the cross arm of the T interconnecting the two light-conducting bars (1) and the vertical leg of the T having the light-exit face (9) at its free end.

4. Interior light according to any one of Claims 1 to 3, characterized in that the light-exit face (4) of the light-conducting bars (1) is arranged at the free end of a stepped end portion (12) extending towards the front face of the interior light.

5. Interior light according to any one of Claims 1 to 4, characterized in that the two light-conducting bars (1) and the light-conducting bridge (6) linking them form an H shape.

6. Interior light according to any one of Claims 1 to 5, characterized in that the two light-conducting bars (1) are interconnected by a bridge (13) at their ends carrying the light-entry face (3).

7. Interior light according to any one of Claims 1 to 6, characterized in that the light-conductor element (7) has at least one laterally extending light-conducting bar (14) which is formed on the end portion carrying the light-entry face (3) of one of the two side-by-side light-conducting bars (1) and is cranked at an angle, a switch (15) being arranged between its free arm and the light-conducting bar adjacent to the free arm.

8. Interior light according to any one of Claims 1 to 7, characterized in that at least one light-conducting portion (16) directed towards the front face of the interior light and having a light-exit face (4 and/or 9) leads through an opening in an impression (18) of the lamp housing (19) receiving a cupped switch button (17) and points towards the cupped switch button (17) the front face of which carries an illuminated symbol (5, 20 or 21).

9. Interior light according to any one of Claims 1 to 8, characterized in that the light-conductor element (7) is covered by a printed circuit board (22) which is mounted on the back of the interior light and which carries on its inner side at least one light source (23) for illuminating the interior of the vehicle, at least one screening element (24) extending between the said light source(s) and the light-conductor element (7).

10. Interior light according to Claim 9, characterized in that a lamp housing (19) comprising the front face of the interior light, the printed circuit board (22), and screening elements (24) arranged between the lamp housing (19) and the printed circuit board (22), form a chamber accommodating the light-conductor element (7).

## Revendications

1. Plafonnier pour véhicules, comportant au moins une source lumineuse (23) servant à l'éclairage de l'habitacle du véhicule, laquelle est actionnable par un interrupteur (8) du plafonnier, au moins une barre de guide optique (1) agencée sur la face postérieure du plafonnier, laquelle présente une surface d'entrée de lumière (3) voisine d'une source lumineuse (2) et une surface de sortie de lumière (4), et un symbole (4) susceptible d'être éclairé par la barre de guide optique (1), caractérisé en ce que
- deux barres de guide optique (1) sont agencées l'une à côté de l'autre sur la face postérieure du plafonnier, auxquelles est associée une source lumineuse (2) respective et lesquelles présentent chacune une surface d'entrée de lumière (3) et une surface de sortie de lumière (4) et qui sont réalisées entre la surface d'entrée de lumière (3) et la surface de sortie de lumière (4) par une entretoise de guide optique (6) pour former un élément de guide optique (7) d'un seul tenant, dont l'entretoise de guide optique (6) présente pour les deux barres de guide optique (1) une surface de sortie de lumière (9) commune ;
- entre les deux barres de guide optique (1) et en position adjacente à l'entretoise de guide optique (6) est agencé l'interrupteur (8) pour l'éclairage de l'habitacle du véhicule, auquel est associé un symbole (5) pour l'éclairage de l'habitacle, susceptible d'être éclairé par la surface de sortie de lumière (9) de l'entretoise de guide optique (6).

2. Plafonnier selon la revendication 1, caractérisé en ce que les deux barres de guide optique (1) présentent sur la face détournée de l'entretoise de guide optique (6) une surface de réflexion (11) formée par un gradin, à travers laquelle des rayons lumineux se réfléchissent jusque dans l'entretoise de guide optique (6) et en ce que l'entretoise de guide optique (6) présente sur le côté détourné de la surface de sortie de lumière (9) un évidement (10) en forme de V dont les surfaces réfléchissent des rayons lumineux jusque vers la surface de sortie de lumière (9).

3. Plafonnier selon l'une ou l'autre des revendications 1 et 2, caractérisé en ce que l'entretoise de guide optique (6) est réalisée en forme de T dont la barre transversale relie les deux barres de guide optique (1) l'une à l'autre et dont la barre verticale présente à son extrémité libre la surface de sortie de lumière (9).

4. Plafonnier selon l'une quelconque des revendications 1 à 3, caractérisé en ce que la surface de sortie de lumière (4) des barres de guide optique (1) est agencée à l'extrémité libre d'un tronçon d'extrémité (12) s'étendant en gradins vers la face antérieure du plafonnier.

5. Plafonnier selon l'une quelconque des revendications 1 à 4, caractérisé en ce que les deux barres de guide optique (1) et l'entretoise de guide optique (6) qui les relient sont réalisées ensemble sous la forme d'un H.

6. Plafonnier selon l'une quelconque des revendications 1 à 5, caractérisé en ce que les deux barres de guide optique (1) sont reliées l'une à l'autre par une entretoise (13) à leurs extrémités présentant la surface d'entrée de lumière (3).

7. Plafonnier selon l'une quelconque des revendications 1 à 6, caractérisé en ce que l'élément de guide optique (7) présente au moins une barre de guide optique (14) s'étendant latéralement, laquelle est formée sur le tronçon d'extrémité présentant la surface d'entrée de lumière (3), de l'une des deux barres de guide optique (1) contiguës, et laquelle est réalisée de forme angulaire, un interrupteur étant agencé entre sa branche libre et la barre de guide optique voisine de la branche libre.

8. Plafonnier selon l'une quelconque des revendications 1 à 7, caractérisé en ce qu'au moins un tronçon de guide optique (16) dirigé vers la face antérieure du plafonnier et présentant une surface de sortie de lumière (4 ou 9) passe à travers une ouverture d'un renfoncement (18) du boîtier de lampe (19) recevant un bouton d'interrupteur (17) en forme capuchon et est tourné vers le bouton d'interrupteur (17) en forme capuchon qui porte sur sa face antérieure un symbole (5, 20 ou 21) susceptible d'être éclairé.

9. Plafonnier selon l'une quelconque des revendications 1 à 8, caractérisé en ce que l'élément de guide optique (7) est recouvert par un circuit imprimé (22) fixé sur la face postérieure du plafonnier, ledit circuit imprimé portant sur sa face intérieure au moins une source lumineuse (23) servant à l'éclairage de l'habitacle du véhicule, et en ce qu'au moins un élément formant écran (24) s'étend entre ladite source lumineuse et l'élément de guide optique (7).

10. Plafonnier selon la revendication 9, caractérisé en ce qu'un boîtier de lampe (19) présentant la partie antérieure du plafonnier, le circuit imprimé (22) et des éléments formant écran (24) agencés entre le boîtier de lampe (19) et le circuit imprimé (22) forment une chambre recevant l'élément de guide optique (7).
